(19) Europäisches Patentamt / European Patent Office / Office européen des brevets

(11) **EP 4 464 453 A1**

(12) **EUROPEAN PATENT APPLICATION**
published in accordance with Art. 153(4) EPC

(43) Date of publication:
**20.11.2024  Bulletin 2024/47**

(21) Application number: **24719448.3**

(22) Date of filing: **22.03.2024**

(51) International Patent Classification (IPC):
**B23K 26/21** (2014.01)    **B23K 15/00** (2006.01)
**B23K 26/04** (2014.01)    **B23K 101/12** (2006.01)

(86) International application number:
**PCT/JP2024/011240**

(87) International publication number:
**WO 2024/203819 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023  JP 2023058411**

(71) Applicant: **Daikin Industries, Ltd.
Osaka 530-0001 (JP)**

(72) Inventors:
• **MIYATAKE, Toshiaki**
  **Osaka-shi**
  **Osaka**
  **5300001 (JP)**
• **ITO, Masatoshi**
  **Osaka-shi**
  **Osaka**
  **5300001 (JP)**

(74) Representative: **Hoffmann Eitle
Patent- und Rechtsanwälte PartmbB
Arabellastraße 30
81925 München (DE)**

(54) **WELDING METHOD AND METHOD FOR MANUFACTURING PRESSURE CONTAINER**

(57)    A welding method for welding a first member and a second member with different thicknesses in a butt joint is provided. The method includes correcting a focal point of a high-energy beam for keyhole welding from a butting plane 3 between a face 12 of the first member 1 and a face 22 of the second member 2 toward one of the faces 12, 22 by a predetermined amount for the welding, the one of the faces 12, 22 having a step 73 created by butting together the face 12 of the first member 1 and the face 22 of the second member 2 and being closer to an irradiation head 4 of the high-energy beam.

FIG.1

t1<t2

**Description**

Technical Field

The present disclosure relates to a welding method and a method for manufacturing pressure vessel.

Background Art

For example, Patent Literature 1 discloses a method for joining by welding thickwalled metal workpieces joined by at least two welding layers and having a wall thickness of greater than 6 mm, the method including providing seam preparations in the cross-sections of the welded portions for a full-area connection before welding in weld zones for the at least two welding layers.

Citation List

Patent Literature

Patent Literature 1: Japanese Patent No. 5519494

Summary of Invention

Technical Problem

When welding workpieces with different thicknesses in a butt joint, tapering the edges of the workpieces in conjunction with beveling them requires precision control of the machined areas, making it difficult to reduce manufacturing costs. In addition, if any postprocessing is performed to improve appearance, such as additional welding or cutting of the welded portions, it becomes even more difficult to reduce manufacturing costs.
It is an object of the present disclosure to reduce manufacturing costs when welding workpieces with different thicknesses in a butt joint.

Solution to Problem

The present disclosure provides a welding method for welding a first member and a second member with different thicknesses in a butt joint. The method includes: correcting a focal point of a high-energy beam for keyhole welding from a butting plane between a face of the first member and a face of the second member toward one of the faces by a predetermined amount for the welding, the one of the faces having a step created by butting together the face of the first member and the face of the second member and being closer to an irradiation head of the high-energy beam. This welding method can reduce manufacturing costs when welding workpieces with different thicknesses in a butt joint.
The predetermined amount may be less than or equal to 90% of a focus diameter at the focal point. This can increase the molten amount of the member including the face closer to the irradiation head.
The predetermined amount may be less than or equal to 50% of a focus diameter at the focal point. This can increase the molten amount of the member including the face closer to the irradiation head.
A molten amount by the keyhole welding may be greater on one of the faces of the first member and the second member than the other, the one being closer to the irradiation head than the other. This more reliably ensures that the gap between the first member and the second member is filled.
The keyhole welding may be performed by a main laser having the focal point to be corrected and an auxiliary laser provided around the main laser. This allows for melting over a wider area.
The keyhole welding may be laser welding or electron beam welding. This allows for welding with high energy.
Welding conditions for a penetration depth Y of the keyhole welding may be expressed by the following formula:

$$Y = 0.648t + 2.979p - 0.001s + 0.004p(s - 2000) + 0.001c(s - 2000) + 0.844p(t - 7.7) + 0.25w - 0.231c + 0.778p(c - 2) + 3.789$$

where t is a thickness, p is a correction amount, s is a speed, w is a beam power, and c is a chamfer length. This ensures a penetration depth of the keyhole welding.
A gap margin range GAP between the first member and the second member may be expressed by the following formula:

$$GAP \leqq \frac{D^2}{8t} \pi$$

where D is a focus diameter, and t is a thickness. This more reliably ensures that the gap between the first member and the second member is filled.

In another aspect, the present disclosure provides a method for manufacturing a pressure vessel. The method includes: making a pressure vessel by keyhole welding using the welding method described above.

Brief Description of the Drawings

FIG. 1 illustrates a welding method according to a first embodiment.

FIGS. 2A to 2C illustrate correction amounts, where FIG. 2A illustrates a case where the correction amount is 0%, FIG. 2B illustrates a case where the correction amount is 50%, and FIG. 2C illustrates a case where the correction amount is 90%.

FIGS. 3A and 3B illustrate an application example using multiple high-energy beams, where FIG. 3A illustrates first and second members as viewed from multiple high-energy beams, and FIG. 3B illustrates a cross-section along line IIIb-IIIb in FIG. 3A.

FIG. 4 illustrates a weld in a butt joint formed by main and auxiliary beams.

FIG. 5 illustrates a welding method according to a second embodiment.

FIGS. 6A and 6B illustrate an application example using multiple high-energy beams, where FIG. 6A illustrates the first and second members as viewed from multiple high-energy beams, and FIG. 6B illustrates a cross-section along line VIb-VIb in FIG. 6A.

FIG. 7 illustrates a weld in a butt joint formed by main and auxiliary beams.

FIG. 8 illustrates a welding method according to a third embodiment.

FIGS. 9A and 9B illustrate irradiation heads, where FIG. 9A illustrates the irradiation head according to the first and second embodiments, and FIG. 9B illustrates an irradiation head according to a first variant.

FIGS. 10A and 10B illustrate a welding method according to a second variant, where FIG. 10A illustrates the first and second members as viewed from the irradiation head, and FIG. 10B illustrates a cross-section along line Xb-Xb in FIG. 10A.

FIGS. 11A-11C illustrate welding conditions, where FIG. 11A illustrates the first and second members as viewed from the irradiation head, FIG. 11B illustrates a cross-section along line XIb-XIb in FIG. 11A, and FIG. 11C illustrates a weld made using keyhole welding.

FIGS. 12A and 12B illustrate applications of the present embodiments to a pressure vessel, each showing an example of the pressure vessel with dividing walls of different thicknesses.

Description of Embodiments

Exemplary embodiments are now detailed with reference to the appended drawings.

[First Embodiment]

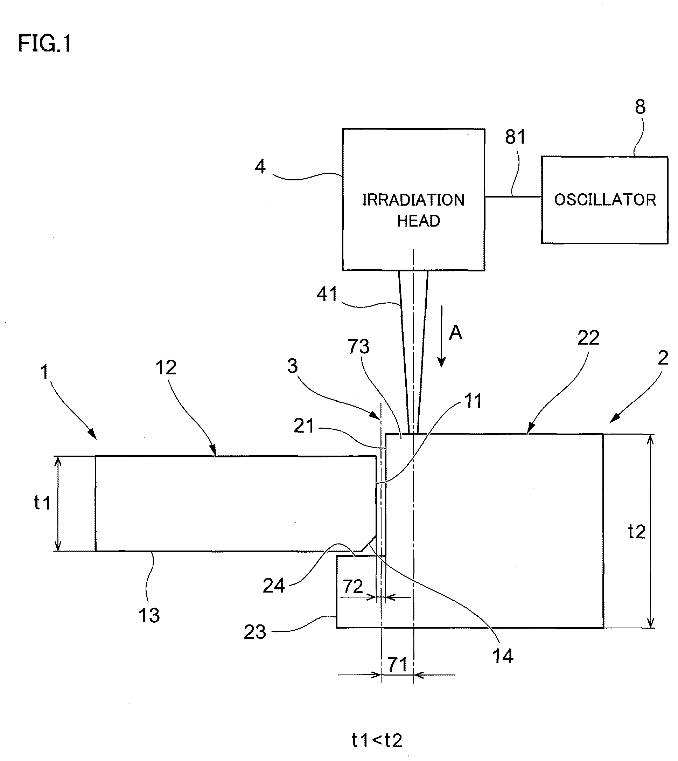

FIG. 1 illustrates a welding method according to a first embodiment.

The first embodiment shown in FIG. 1 relates to a case of welding a first member 1 and a second member 2 in a butt joint. In this case, the welding is keyhole welding, which uses high energy densities to generate metal vapor and advantageously create cavities on the surface.

An irradiation head 4 for laser welding is located opposite an end face 11 of the first member 1 and an end face 21 of the second member 2. The irradiation head 4 includes a focusing lens (not shown) that focuses the laser light output from an oscillator 8 through an optical fiber 81 and delivers a high-energy beam 41 for the keyhole welding in the irradiation direction A.

To further illustrate, an imaginary butting plane 3, indicated by a dash-dotted line, is located at the interface between the end face 11 of the first member 1 and the end face 21 of the second member 2. In other words, the butting plane 3 is located between the end face 11 of the first member 1 and the end face 21 of the second member 2.

The first member 1 has a thickness t1 and the second member 2 has a thickness t2. The values of the thicknesses t1, t2 are not the same, so that there is a thickness difference between the first and second members 1, 2. More specifically, in the first embodiment, the thickness t1 of the first member 1 is smaller than the thickness t2 of the second member 2 (t1 < t2).

The second member 2 includes a step 23 extending toward the first member 1. The step 23 includes a bottom face 24 facing an inner face 13 of the first member 1. Thus, the step 23 includes a portion with a generally L-shaped cross-section defined by the end face 21 and the bottom face 24. The inner face 13 as referred to herein is opposite a face 12 of the first member 1. A chamfered portion 14 is formed at a connection between the end face 11 and the inner face 13 of the first member 1.

To further illustrate, the step 23 of the second member 2 is situated away from a face 22 of the second member 2 with respect to the irradiation direction A.

The first and second members 1, 2 may be planar or cylindrical.

Now, a description is given of the positional relationship between the face 12 of the first member 1 and the face 22 of the second member 2 with respect to the irradiation head 4 when the first member 1 and the second member 2 are butted together.

The face 12 of the first member 1 and the face 22 of the second member 2 are at different positions relative to the irradiation head 4 with respect to the irradiation direction A. In other words, butting together the end face 11 of the first member 1 and the end face 21 of the second member 2 creates a step 73 in the second member 2. Such a step 73 defines a corner that connects the end face 21 and the face 22 of the second member 2.

More specifically, in the first embodiment, the face 22 of the second member 2 is closer to the irradiation head 4 than the face 12 of the first member 1 is. In other words, the face 22 of the thicker second member 2 is closer to the irradiation head 4, and the face 12 of the thinner first member 1 is farther from the irradiation head 4.

The high-energy beam 41 from the irradiation head 4 is focused on the face 22 of the second member 2, which is closer to the irradiation head 4, rather than on the face 12 of the first member 2, which is farther from the irradiation head 4.

The focal point of such a high-energy beam 41 is not located on the butting plane 3 but is shifted toward the face 22 of the second member 2, which is the face closer to the irradiation head 4.

The amount of shift of the focal point is a predetermined amount 71. Such an amount of shift is used to correct the focal point of the high-energy beam 41 from the position of the butting plane 3 toward the second member 2 in order to accommodate the step created by the first and second members 1, 2. The amount of shift can be referred to as a correction amount.

Thus, in the first embodiment, the focal point of the high-energy beam 41 for keyhole welding is shifted by the predetermined amount 71 from the butting plane 3 toward the face 22 of the second member 2 for the welding.

A gap 72 at the interface between the end face 11 of the first member 1 and the end face 21 of the second member 2 is within a predetermined range. Such a range is referred to as a gap margin, which is detailed below.

Note that FIG. 1 shows an example schematic configuration in which keyhole welding is performed by laser welding using high-power laser light. Instead of the laser welding described above, which is one of beam welding techniques, keyhole welding may be performed by electron beam welding.

Such electron beam welding, for example, uses the high energy of accelerated electrons released from a vacuum tube. An example schematic configuration for electron beam welding includes an electron gun with a filament (negative electrode), an anode (positive electrode), and a Wehnelt electrode (grid). Under high vacuum, thermoelectrons released from the tip end of the filament heated by a heating power supply are restricted by the Wehnelt electrode and accelerated by the anode. The thermoelectrons are then focused by an electromagnetic focusing coil utilizing the effect of the electromagnetic field, resulting in the generation of an electron beam, which is the high-energy beam 41.

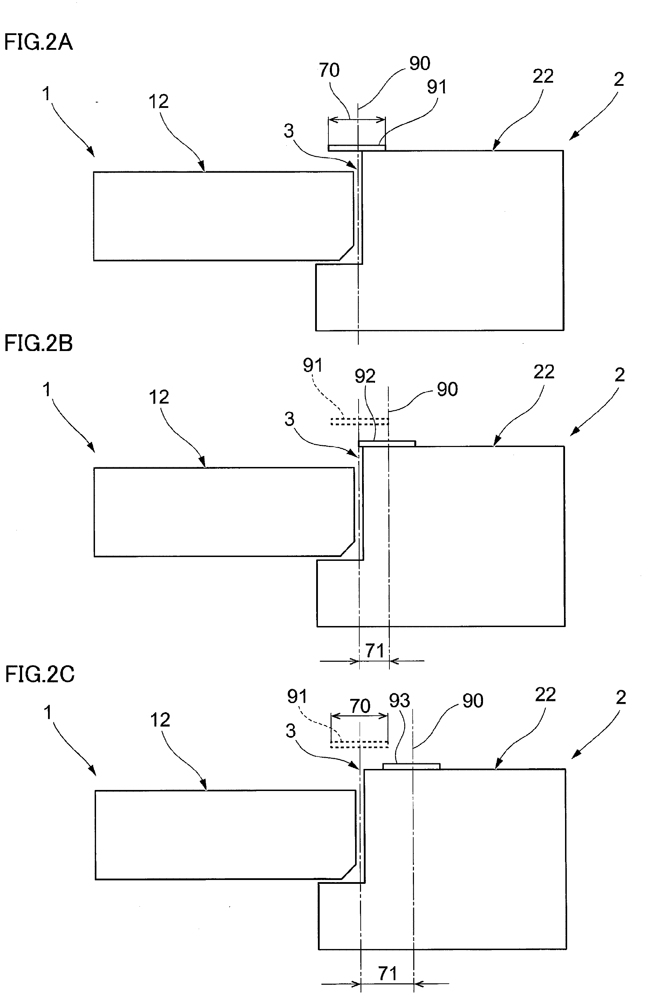

FIGS. 2A to 2C illustrate the correction amounts, where FIG. 2A illustrates a case where the correction amount is 0%, FIG. 2B illustrates a case where the correction amount is 50%, and FIG. 2C illustrates a case where the correction amount is 90%.

In the example shown in FIG. 2A, the focal point of the high-energy beam 41 is located at the butting plane 3 and is thus not corrected. More specifically, the high-energy beam 41 (see FIG. 1) is focused at a focus region 91 centered around the focus position 90, with a focus diameter 70.

In the example shown in FIG. 2B, the focal point of the high-energy beam 41 is shifted by the predetermined amount 71 from the butting plane 3 toward the second member 2, where the correction amount is 50%. More specifically, in FIG. 2B, the high-energy beam 41 is focused at a focus region 92 centered around the focus position 90, with the focus diameter being the same as that in FIG. 2A.

For the purpose of illustrating the correction amount, FIG. 2B shows the focus region 91 shown in FIG. 2A in dashed lines, in contrast to the focus region 92 shifted by the predetermined amount 71. The predetermined amount 71 is a percentage of the focus diameter 70 and is 50% as the correction amount. In other words, the focus region 92 in FIG. 2B corresponds to the focus region 91 in FIG. 2A shifted by half the amount of the focus diameter 70 in the direction toward the second member 2.

In the example shown in FIG. 2C, the focal point of the high-energy beam 41 is shifted by the predetermined amount 71 from the butting plane 3 toward the second member 2, where the focal point is further shifted in the direction toward the second member 2 than the example of FIG. 2B, with the correction amount being 90%. More specifically, in FIG. 2C, the high-energy beam 41 is focused at a focus region 93 centered around the focus position 90 on the face 22 of the second member 2, with the focus diameter being the same as those in FIGS. 2A and 2B.

FIG. 2C also shows the focus region 91 shown in FIG. 2Ain dashed lines, in contrast to the focus region 93 shifted by the predetermined amount 71. The focus region 93 in FIG. 2C corresponds to the focus region 91 shifted by 90% of the focus diameter 70 of the focus region 91 in the direction toward the second member 2.

As the predetermined amount 71 as the correction amount is increased in this manner, the amount of high-energy beam 41 delivered onto the face 22 of the second member 2 increases, which in turn leads to a wider molten region in the second member 2 and an increased molten amount of the second member 2 including the step 73 (see FIG. 1). The predetermined amount 71 is less than or equal to 90% of the focus diameter at the focal point.

On the other hand, if the predetermined amount 71 as the correction amount is excessively large, the amount of high-energy beam 41 delivered onto the face 12 of the first member 1 will decrease, which in turn leads to a reduced molten amount of the first member 1 and may thus reduce the weld strength. Therefore, the predetermined amount 71 is more preferably 50% or less.

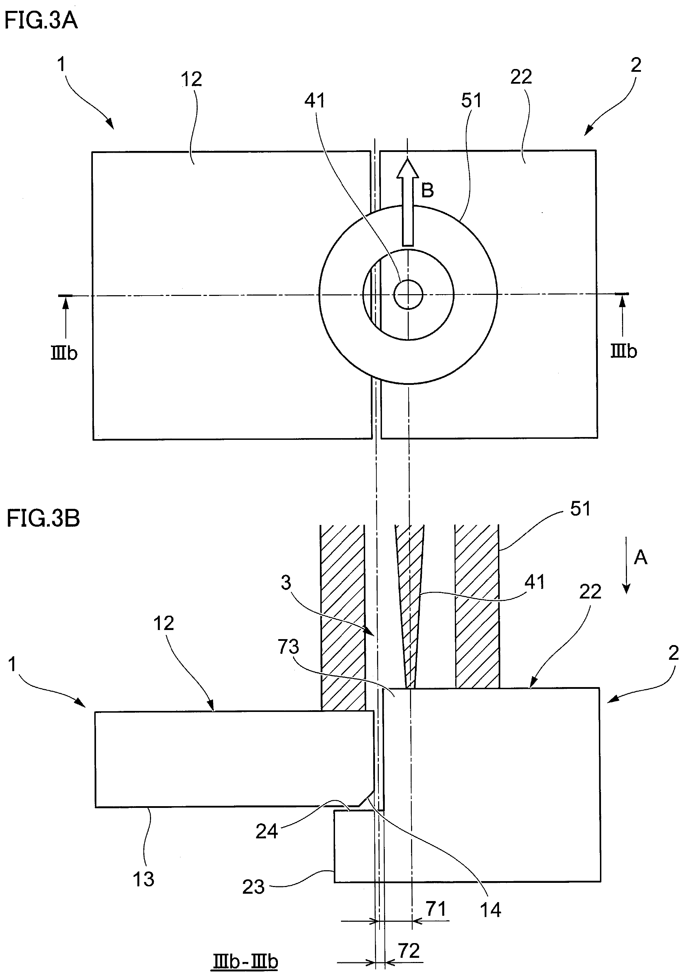

Referring now to FIGS. 3A and 3B, an application example according to the first embodiment is described.

FIGS. 3A and 3B illustrate an application example using multiple high-energy beams 41, 51, where FIG. 3A illustrates the first and second members 1, 2 as viewed from the high-energy beams 41, 51, and FIG. 3B illustrates a cross-section along line IIIb-IIIb in FIG. 3A. FIG. 3B corresponds to FIG. 1. A dash-dotted line representing the butting plane 3 is shown across FIGS. 3A and 3B to clarify the positional correspondences.

As shown in FIG. 3A, in this application example according to the first embodiment, an additional high-energy beam 51 is provided around the high-energy beam 41.

The high-energy beams 41, 51 are integrated and move together in the welding direction B.

As shown in FIG. 3B, the irradiation head 4 delivers the high-energy beam 41 and also delivers the additional high-energy beam 51. The irradiation zone of the high-energy beam 51 is provided around the high-energy beam 41 excluding the irradiation region of the high-energy beam 41 and is of a so-called donut shape.

The high-energy beam 41 and the high-energy beam 51 from the irradiation head 4 may be referred to hereinafter as the main beam 41 and the auxiliary beam 51, respectively. The main beam 41 has a higher power than the auxiliary beam 51.

As shown in FIG. 3B, the main beam 41 is delivered onto the face 22 of the second member 2, and the auxiliary beam 51 is delivered onto both the face 12 of the first member 1 and the face 22 of the second member 2. A more amount of the auxiliary beam 51 is delivered onto the face 22 of the second member 2 than on the face 12 of the first member 1 due to the irradiation head 4 being shifted.

By focusing the high-energy beams 41, 51 on the face 22 of the second member 2, the high-energy beams 41, 51 with higher energy can be delivered onto the second member 2 than on the first member 1.

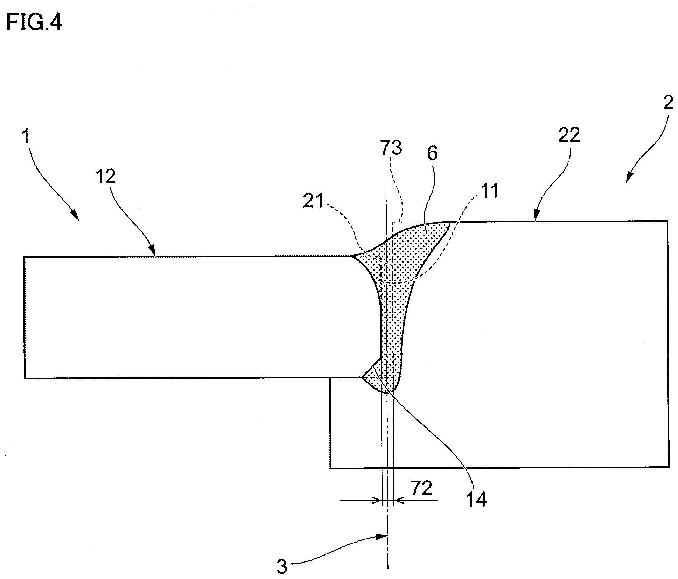

FIG. 4 illustrates a weld 6 in a butt joint formed by the main and auxiliary beams 41, 51. FIG. 4 shows the situation after the melting, while FIGS. 3A and 3B above show the situation prior to the melting.

As shown in FIG. 4, the portion including the step 73 is melted by the main and auxiliary beams 41, 51. The molten metal moves toward the first member 1 and enters the gap 72, thereby filling the gap 72, including the space expanded by the chamfered portion 14, to form the weld 6 in the butt joint. The gap 72 is filled by the melting of both the first and second members 1, 2. To further illustrate, the molten amount of the second member 2 filling the gap 72 is greater than that of the first member 1.

The above welding method, in which the focal point of the main beam 41 is shifted by a predetermined amount in the direction toward the face 22, which is the face closer to the irradiation head 4, of the second member 2 for welding rather than locating the focal point at the butting plane 3, allows for forming the weld 6 by filling the gap 72, if any. In addition, this method eliminates the need for beveling and tapering processes when welding the first and second members 1, 2 in a butt joint.

While an example of keyhole welding using the main and auxiliary beams 41, 51 has been described above, the same description applies to keyhole welding using the main beam 41 alone without the auxiliary beam 51, so that the illustration and detailed description of such welding is omitted.

[Second Embodiment]

A second embodiment is now described. The second embodiment includes common features to those in the first embodiment described above. Accordingly, the same reference numerals are used in the drawings to identify such common features. However, descriptions of such features may be omitted from the description.

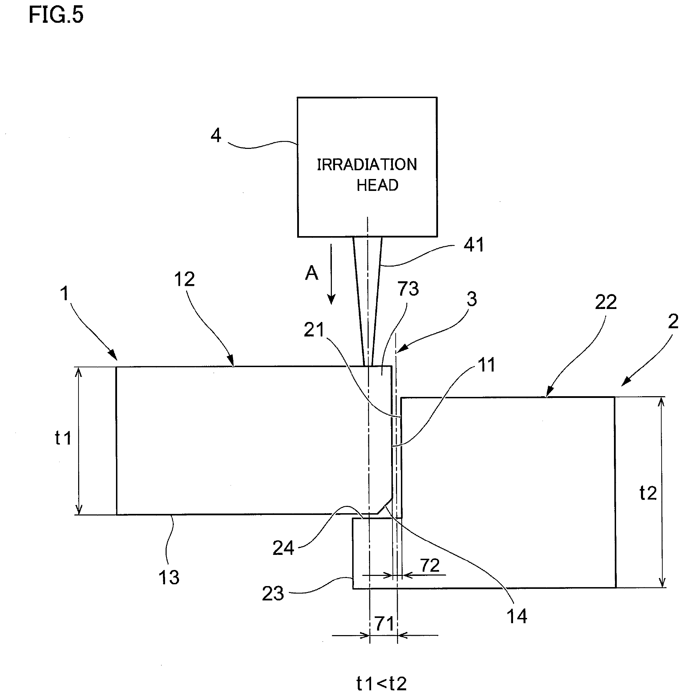

FIG. 5 illustrates a welding method according to the second embodiment, corresponding to FIG. 1 illustrating the first embodiment.

The second embodiment shown in FIG. 5 illustrates a welding method of welding the first and second members 1, 2 in a butt joint. The irradiation head 4 is the same as that in the first embodiment (see FIG. 1) in that it delivers the high-energy beam 41.

Similarly to the first embodiment (see FIG. 1), the thickness t1 of the first member 1 is smaller than the thickness t2 of the second member 2 (t1 < t2).

On the other hand, unlike the first embodiment (see FIG. 1), in which the face 22 of the second member 2 is located closer to the irradiation head 4 (see FIG. 1), the face 12 of the first member 1 is located closer to the irradiation head 4 than the face 22 of the second member 2 is.

In the second embodiment, the high-energy beam 41 from the irradiation head 4 is focused on the face 12 of the first member 1, which is the face closer to the irradiation head 4, and the focal point of the high-energy beam 41 is shifted in the direction toward the face 12 of the first member 1, which is the face closer to the irradiation head 4, rather than in the direction toward the face 22 of the second member 2, which is the face farther from the irradiation head 4. The second embodiment differs from the first embodiment (see FIG. 1) in these respects.

Similarly to the first embodiment, the first and second members 1, 2 may be planar or cylindrical.

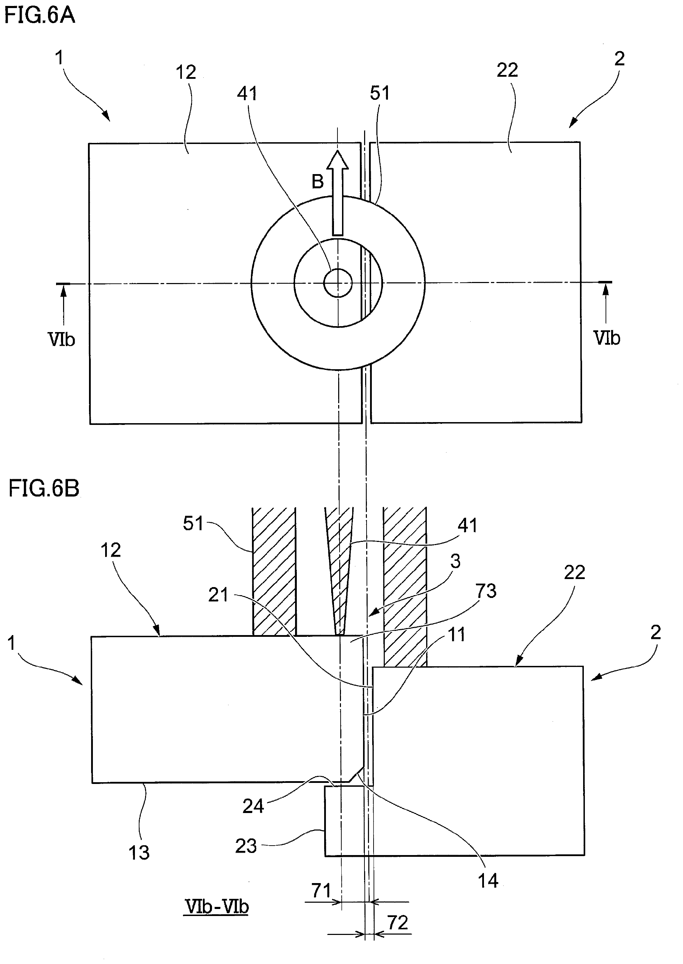

Referring now to FIGS. 6A and 6B, an application example according to the second embodiment is described.

FIGS. 6A and 6B illustrate an application example using multiple high-energy beams 41, 51, where FIG. 6A illustrates the first and second members 1, 2 as viewed from the high-energy beams 41, 51, and FIG. 6B illustrates a cross-section along line VIb-VIb in FIG. 6A. FIGS. 6A and 6B correspond to FIGS. 3A and 3B illustrating the first embodiment.

The application example according to the second embodiment shown in FIG. 6A is similar to the first embodiment in that the high-energy beam 51 is provided around the high-energy beam 41 and moves with the high-energy beam 41 in the welding direction B.

As shown in FIG. 6B, this application example differs from the first embodiment in that the main beam 41 is delivered onto the face 12 of the first member 1 and the auxiliary beam 51 is delivered onto both the face 12 of the first member 1 and the face 22 of the second member 2.

Another distinction from the first embodiment is that a more amount of the auxiliary beam 51 is delivered onto the face 12 of the first member 1 than on the face 22 of the second member 2 due to the main beam 41 being shifted.

As such, this application example differs from the first embodiment in that the high-energy beams 41, 51 with higher energy can be delivered onto the first member 1 than on the second member 2.

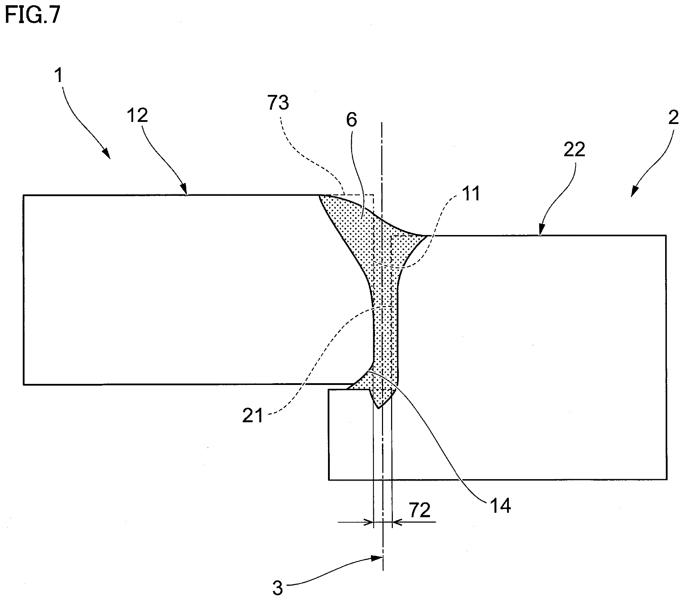

FIG. 7 illustrates a weld 6 in a butt joint formed by the main and auxiliary beams 41, 51, corresponding to FIG. 4 illustrating the first embodiment.

As shown in FIG. 7, the portion including the step 73 is melted by the main and auxiliary beams 41, 51. The molten metal moves toward the second member 2 and enters the gap 72, thereby filling the gap 72, including the space expanded by the chamfered portion 14, to form the weld 6 in the butt joint.

[Third Embodiment]

A third embodiment is now described. The third embodiment includes common features to those in the first embodiment described above. Accordingly, the same reference numerals are used in the drawings to identify such common features. However, descriptions of such features may be omitted from the description.

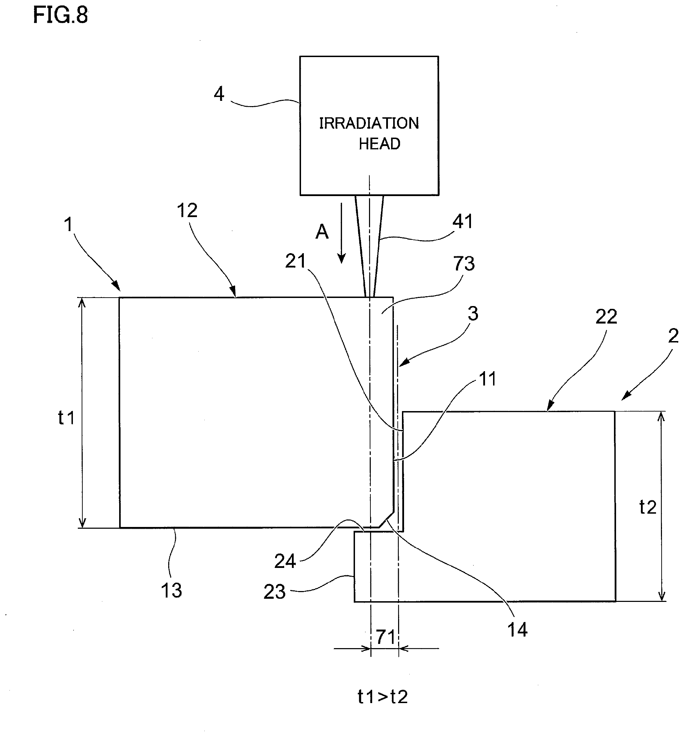

FIG. 8 illustrates a welding method according to the third embodiment, corresponding to FIG. 1 illustrating the first embodiment.

The third embodiment shown in FIG. 8 illustrates a welding method of welding the first and second members 1, 2 in a butt joint. The irradiation head 4 is the same as that in the first embodiment (see FIG. 1) in that it delivers the high-energy beam 41.

Unlike both the first embodiment (see FIG. 1) and the second embodiment (see FIG. 5), the thickness t1 of the first member 1 is greater than the thickness t2 of the second member 2 (11 > t2).

On the other hand, unlike the first embodiment (see FIG. 1) and similarly to the second embodiment (see FIG. 5), the face 12 of the first member 1 is located closer to the irradiation head 4 than the face 22 of the second member 2 is.

In the third embodiment, the high-energy beam 41 from the irradiation head 4 is focused on the face 12 of the first member 1, which is the face closer to the irradiation head 4, rather than on the face 22 of the second member 2 farther from the irradiation head 4. Additionally, in the third embodiment, the focal point of the high-energy beam 41 is shifted in the direction toward the face 12 of the first member 1, which is the face closer to the irradiation head 4, rather than in the direction toward the face 22 of the second member 2, which is the face farther from the irradiation head 4. In these respects, the third embodiment differs from the first embodiment (see FIG. 1) and is similar to the second embodiment (see FIG. 5).

Although not illustrated and described herein, application examples according to the third embodiment may employ similar configurations as those in the application examples according to the first and second embodiments (see FIGS. 3A-3B and 6A-6B).

[Variants]

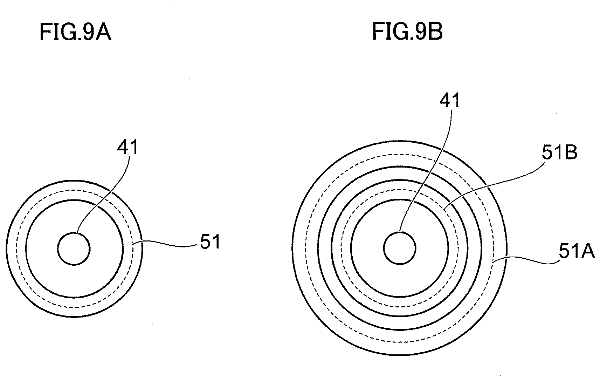

FIGS. 9A and 9B illustrate the high-energy beams 41, 51, where FIG. 9A is a plan view of the high-energy beams 41, 51 according to the first and second embodiments, and FIG. 9B is a plan view of high-energy beams 41, 51A, 51B according to a first variant.

As shown in FIG. 9A, a single, circumferential high-energy beam 51 is provided to continuously surround the high-energy beam 41. This is the same as the application examples according to the first and second embodiments described above (FIG. 3A and FIG. 6A).

In the first variant shown in FIG. 9B, unlike the case of FIG. 9A, the high-energy beam 41 is surrounded by two high-energy beams 51A, 51B. In other words, in the first variant, two high-energy beams 51A, 51B with different outer diameters are provided around the high-energy beam 41. The high-energy beam 51A has a larger diameter and the high-energy beam 51B has a smaller diameter. In other words, the high-energy beam 51B is located between the high-energy beam 41 and the high-energy beam 51A.

The high-energy beams delivered from the high-energy beams 51A, 51B may have the same width or different widths. The first variant is applicable to any of the first, second, and third embodiments described above.

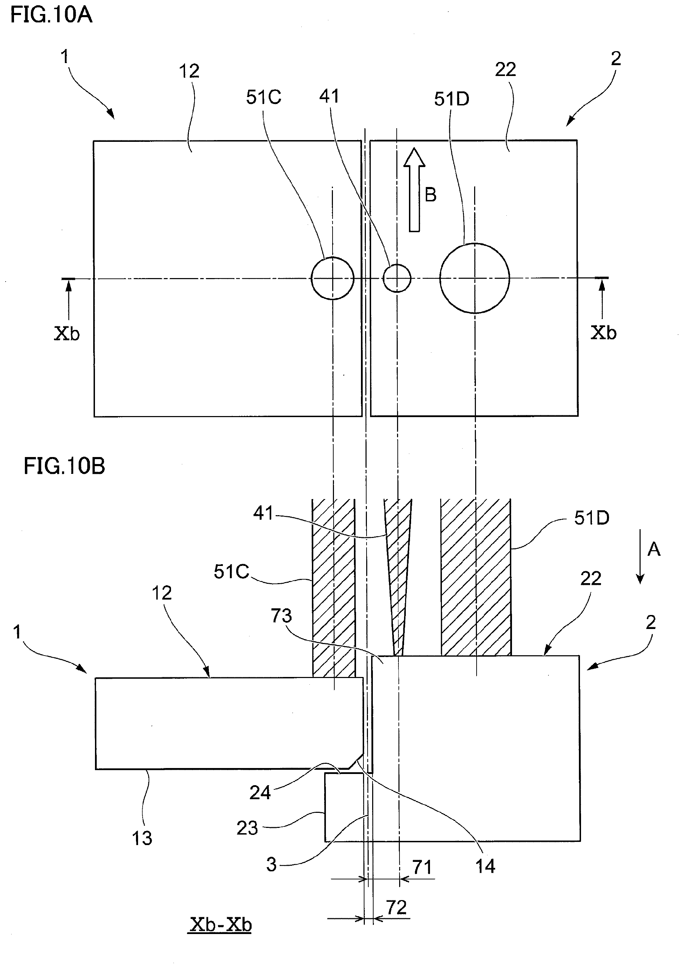

FIGS. 10A and 10B illustrate a welding method according to a second variant, where FIG. 10A illustrates the first and second members 1, 2 as viewed from the high-energy beams 41, 51, and FIG. 10B illustrates a cross-section along line Xb-Xb in FIG. 10A.

In the second variant shown in FIGS. 10A and 10B, the high-energy beam 41 is shifted in the direction toward the face 22 of the second member 2, which is the face closer to the irradiation head 4, by a predetermined amount 71 with respect to the butting plane 3. This feature is common to the first embodiment described above.

In the second variant, on the other hand, high-energy beams 51C, 51D are provided in addition to the high-energy beam 41. The high-energy beams 51C, 51D are located with the high-energy beam 41 therebetween. In other words, the high-energy beam 41 is located between the high-energy beams 51C, 51D.

The high-energy beam 51C is delivered onto the face 12 of the first member 1, while the high-energy beam 51D is delivered onto the face 22 of the second member 2.

To further illustrate, unlike the auxiliary beam 51 shown in the application examples described above (see FIG. 3B and FIG. 6B), the high-energy beams 51C, 51D are not of a donut shape but of a circular shape having the center portion.

The irradiation zones of the high-energy beams 51C, 51D have different outer diameters; the irradiation zone of the high-energy beam 51D is larger in diameter and wider than that of the high-energy beam 51C. Accordingly, more high-energy is input to the second member 2 with the step 73, resulting in an increased molten amount of the second member 2.

Thus, according to the second variant, the second member, which is the thicker one, can be irradiated with the energy with higher power or wider range.

In the first and other embodiments described above, the high-energy beam 41 and the high-energy beams 51, 51C-51D are illustrated as being delivered vertically to the faces 12, 22. However, this is not limiting. That is, in addition to welding methods using a vertical irradiation, an oblique irradiation may also be employed.

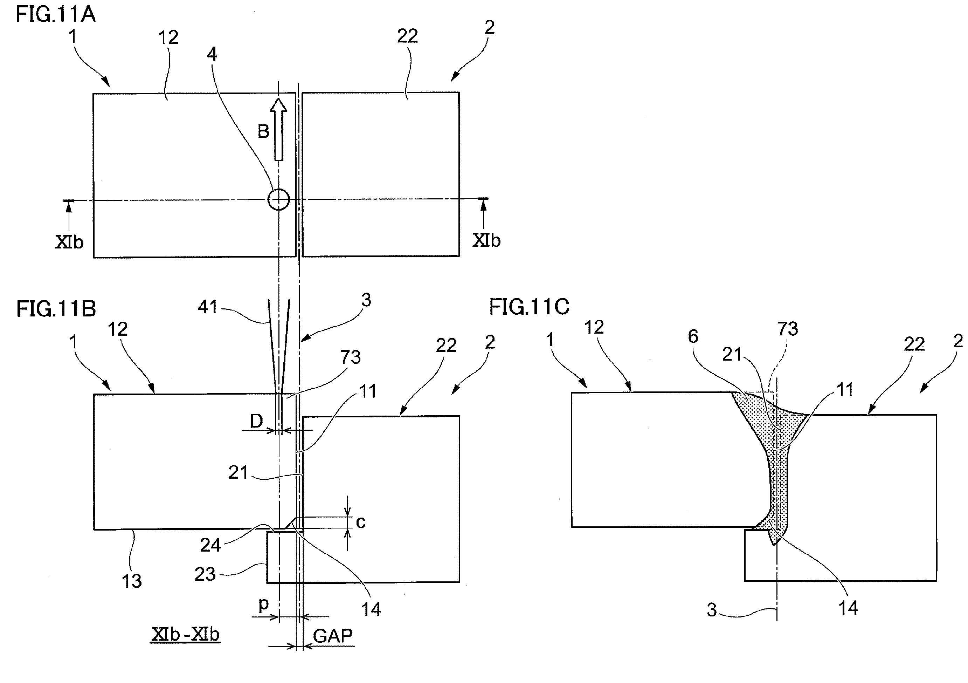

FIGS. 11A-11C illustrate welding conditions, where FIG. 11A illustrates the first and second members 1, 2 as viewed from the irradiation head 4, FIG. 11B illustrates a cross-section along line XIb-XIb in FIG. 11A, and FIG. 11C illustrates a weld 6 made using keyhole welding. For example, FIG. 11A corresponds to FIG. 5, FIG. 11B corresponds to FIG. 6B, and FIG. 11C corresponds to FIG. 7.

Assume that the first member 1, which is the thinner one of the first and second members 1, 2, has a thickness t, its chamfered portion 14 has a chamfer length c, and the main beam 41 is located at the position corresponding to a correction amount p, as shown in FIG. 11B. Also, assume that the main beam 41 has a beam power w.

Also, assume that the main beam 41 moves at a speed s in the welding direction B during welding, as shown in FIG. 11A.

The penetration depth Y shown in FIG. 11C can then be calculated by the following formula.

$$Y = 0.648t + 2.979p - 0.001s + 0.004p(s - 2000) + 0.001c(s - 2000) + 0.844p(t - 7.7) + 0.25w - 0.231c + 0.778p(c - 2) + 3.789$$

where t is the thickness, p is the correction amount, s is the speed, w is the beam power, and c is the chamfer length.

Also, assume that the main beam 41 has a focus diameter D, as shown in FIG. 11B. Then, a gap margin range GAP, which represents allowable values of the gap 72 when the gap 72 is filled by the melt of the molten first and second members 1, 2, can be calculated by the following formula.

If the gap 72 is greater than the gap margin range GAP, the filled weld 6 (see FIG. 4, for example) is unlikely to be formed.

[Formula 2]

$$GAP \leqq \frac{D^2}{8t}\pi$$

where D is the focus diameter, and t is the thickness.

[Applications]

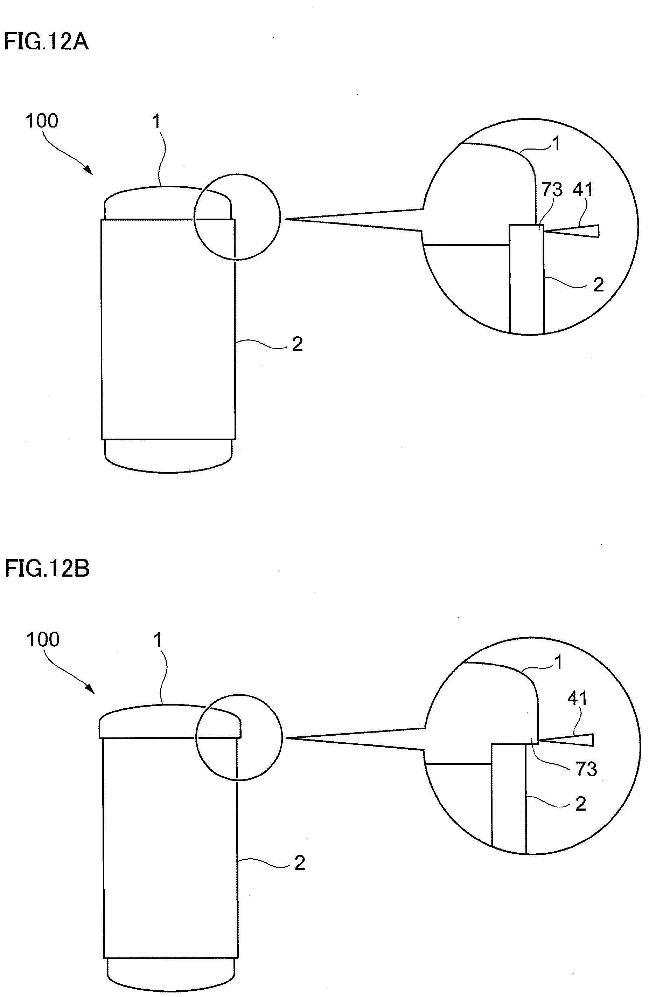

FIGS. 12A and 12B illustrate applications of the present embodiments to a pressure vessel 100, each showing an example of the pressure vessel 100 with dividing walls of different thicknesses. The pressure vessel 100 is configured as having a body pipe and a top plate, and for convenience of illustration, the top plate and the body pipe are referred to hereinafter as the first member 1 and the second member 2, respectively.

In the pressure vessel 100 shown in FIG. 12A, the second member 2 has a larger outer diameter than the first member 1, so that the second member 2 includes the step 73. Thus, the welding method according to the first embodiment described above (see, for example, FIG. 1) is applied. That is, the focal point of the high-energy beam 41 is shifted toward the second member 2. This allows for making the pressure vessel 100 using keyhole welding.

In the pressure vessel 100 shown in FIG. 12B, the second member 2 has a smaller outer diameter than the first member 1, so that the first member 1 includes the step 73. Thus, the welding method according to the second embodiment described above (see, for example, FIG. 5) is applied. That is, the focal point of the high-energy beam 41 is shifted toward the first member 1. This allows for making the pressure vessel 100 using keyhole welding.

While some embodiments have been described above, it will be understood that various modifications may be made to the embodiments and details without departing from the spirit and scope of the appended claims.

Reference Signs List

1 First member
11, 21 End surface
12, 22 Face
2 Second member
3 Butting plane
4, 5 Irradiation head
41, 51 High-energy beam
6 Weld
70 Focus diameter
73 Step
71 Predetermined amount
100 Pressure vessel

**Claims**

1. A welding method for welding a first member and a second member with different thicknesses in a butt joint, the method comprising:
   correcting a focal point of a high-energy beam for keyhole welding from a butting plane between a face of the first member and a face of the second member toward one of the faces by a predetermined amount for the welding, the one of the faces having a step created by butting together the face of the first member and the face of the second member and being closer to an irradiation head of the high-energy beam.

2. The welding method according to claim 1, wherein the predetermined amount is less than or equal to 90% of a focus diameter at the focal point.

3. The welding method according to claim 2, wherein the predetermined amount is less than or equal to 50% of the focus diameter at the focal point.

4. The welding method according to claim 1, wherein a molten amount by the keyhole welding is greater on one of the faces of the first member and the second member than the other, the one being closer to the irradiation head than the other.

5. The welding method according to claim 1, wherein the keyhole welding is performed by a main laser having the focal point to be corrected and an auxiliary laser provided around the main laser.

6. The welding method according to claim 1, wherein the keyhole welding is laser welding or electron beam welding.

7. The welding method according to claim 1, wherein welding conditions for a penetration depth Y of the keyhole welding are expressed by the following formula:

Y = 0.648t + 2.979p - 0.001s + 0.004p(s - 2000) + 0.001c(s - 2000) +0.844p(t - 7.7) + 0.25w - 0.231c + 0.778p(c - 2) + 3.789 where t is a thickness, p is a correction amount, s is a speed, w is a beam power, and c is a chamfer length.

8. The welding method according to claim 1, wherein a gap margin range GAP between the first member and the second member is expressed by the following formula:

$$GAP \leqq \frac{D^2}{8t} \pi$$

where D is a focus diameter, and t is a thickness.

9. A method for manufacturing a pressure vessel, the method comprising:
making a pressure vessel by keyhole welding using the welding method according to claim 1.

## FIG.1

t1<t2

FIG.2A

FIG.2B

FIG.2C

FIG.3A

FIG.3B

IIIb-IIIb

FIG.4

FIG.5

t1<t2

FIG.6A

FIG.6B

VIb-VIb

EP 4 464 453 A1

FIG.7

FIG.8

t1 > t2

FIG.9A

FIG.9B

FIG.10A

FIG.10B

Xb-Xb

EP 4 464 453 A1

FIG.11A

FIG.11B

XIb - XIb

FIG.11C

FIG.12A

FIG.12B

## INTERNATIONAL SEARCH REPORT

| International application No. |
|---|
| **PCT/JP2024/011240** |

| A. | CLASSIFICATION OF SUBJECT MATTER |
|---|---|

*B23K 26/21*(2014.01)i; *B23K 15/00*(2006.01)i; *B23K 26/04*(2014.01)i; *B23K 101/12*(2006.01)n
FI:    B23K26/21 F; B23K26/04; B23K15/00 501A; B23K101:12

According to International Patent Classification (IPC) or to both national classification and IPC

| B. | FIELDS SEARCHED |
|---|---|

Minimum documentation searched (classification system followed by classification symbols)

B23K26/21; B23K15/00; B23K26/04; B23K101/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2006-218497 A (NIPPON STEEL CORPORATION) 24 August 2006 (2006-08-24) paragraphs [0023]-[0037], fig. 3-4 | 1-4, 9 |
| Y | paragraphs [0023]-[0037], fig. 3-4 | 6 |
| Y | JP 2009-178761 A (HITACHI-GE NUCLEAR ENERGY, LTD.) 13 August 2009 (2009-08-13) paragraph [0013] | 6 |
| Y | JP 7-132386 A (NISSAN MOTOR CO., LTD.) 23 May 1995 (1995-05-23) paragraph [0002] | 6 |
| A | JP 5-057467 A (TOYOTA JIDOSHA KABUSHIKI KAISHA) 09 March 1993 (1993-03-09) entire text, all drawings | 1-9 |
| A | JP 7-195187 A (TOYOTA JIDOSHA KABUSHIKI KAISHA) 01 August 1995 (1995-08-01) entire text, all drawings | 1-9 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/011240**

**C.     DOCUMENTS CONSIDERED TO BE RELEVANT**

| Category* | Citation of document, with indication, where appropriate, of the relevant passages | Relevant to claim No. |
|---|---|---|
| A | JP 2023-007119 A (FUTABA INDUSTRIAL CO., LTD.) 18 January 2023 (2023-01-18) entire text, all drawings | 1-9 |

Form PCT/ISA/210 (second sheet) (July 2022)

**INTERNATIONAL SEARCH REPORT**
Information on patent family members

International application No.

**PCT/JP2024/011240**

| Patent document cited in search report | | | Publication date (day/month/year) | Patent family member(s) | | | Publication date (day/month/year) |
|---|---|---|---|---|---|---|---|
| JP | 2006-218497 | A | 24 August 2006 | (Family: none) | | | |
| JP | 2009-178761 | A | 13 August 2009 | (Family: none) | | | |
| JP | 7-132386 | A | 23 May 1995 | (Family: none) | | | |
| JP | 5-057467 | A | 09 March 1993 | US<br>entire text, all drawings<br>EP | 5250783<br><br>531139 | A<br><br>A1 | |
| JP | 7-195187 | A | 01 August 1995 | (Family: none) | | | |
| JP | 2023-007119 | A | 18 January 2023 | US<br>entire text, all drawings<br>DE<br>CN | 2023/0001510<br><br>102022116126<br>115570264 | A1<br><br>A1<br>A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5519494 B